# EUROPÄISCHE PATENTSCHRIFT

(11) **EP 2 007 611 B1**
(45) Veröffentlichungstag und Bekanntmachung des Hinweises auf die Patenterteilung: **13.08.2014**
(21) Anmeldenummer: 07727291.2
(22) Anmeldetag: 23.03.2007
(51) Int. Cl.: B60T 8/17, B60T 8/26, B60T 8/32, B60T 8/40

(54) **VERFAHREN ZUR REGELUNG DES DRUCKES IN EINEM ELEKTRONISCH GESTEUERTEN BREMSSYSTEM UND ELEKTRONISCHES BREMSSYSTEM**
METHOD FOR REGULATING THE PRESSURE IN AN ELECTRONICALLY CONTROLLED BRAKE SYSTEM, AND ELECTRONIC BRAKE SYSTEM
PROCÉDÉ DE RÉGLAGE DE LA PRESSION DANS UN SYSTÈME DE FREINAGE À COMMANDE ÉLECTRONIQUE, ET SYSTÈME DE FREINAGE ÉLECTRONIQUE CORRESPONDANT

(30) Priorität: 11.04.2006 DE 102006017357
(43) Veröffentlichungstag der Anmeldung: 31.12.2008
(73) Patentinhaber: Continental Teves AG & Co. oHG, 60488 Frankfurt (DE)
(72) Erfinder: WOYWOD, Jürgen, 64546 Mörfelden (DE); MEIXNER, Michael, 60320 Frankfurt (DE); ZYSNO, René, 60435 Frankfurt (DE)
(86) Internationale Anmeldenummer: PCT/EP2007/052817
(87) Internationale Veröffentlichungsnummer: WO 2007/118760

(56) Entgegenhaltungen:
- DE-A1- 10 316 351
- DE-A1- 19 640 743
- DE-A1- 19 941 482
- US-B1- 6 701 243

## Beschreibung

Die Erfindung betrifft ein Verfahren gemäß Oberbegriff von Anspruch 1 sowie ein elektronisches Bremssystem gemäß Oberbegriff von Anspruch 8.

Das Kraftrad hat sich im Laufe der letzten Jahrzehnte von einem kostengünstigen Fortbewegungsmittel zu einem Freizeitgefährt entwickelt, bei welchem vermehrt sowohl die Sicherheit als auch der Komfort des Fahrers in den Vordergrund gerückt wird.

Ähnlich wie bei den Automobilen vor einigen Jahren werden zunehmend auch Krafträder mit Anti-Blockiersystemen (ABS) ausgerüstet. Aus der EP 0 548 985 B1 ist beispielsweise eine Blockierschutzvorrichtung für Krafträder bekannt. Ferner ist aus der DE 40 00 212 A1 ein Verfahren zum blockiergeschützten Bremsen eines Kraftrades und zum Bestimmen des Haftbeiwertes bekannt.

Traditionell haben Krafträder je ein Betätigungselement für jeden der beiden Bremskreise. Meist wird die Vorderradbremse durch einen "Handbremshebel" und die Hinterradbremse durch einen "Fußbremshebel" betätigt.

Im Zusammenhang mit Motorrädern versteht man unter einer "Integralbremsanlage" eine Bremsanlage, bei der bei Betätigung des Handbremshebels bzw. des Fußbremshebels zusätzlich die Bremse des zweiten Bremskreises durch einen aktiven Druckaufbau eingebremst wird. Durch Betätigen eines einzigen Betätigungselements können also beide Bremsen angesteuert werden. Werden bei Betätigung des Hand- und des Fußbremshebels jeweils beide Bremsen angesteuert, so bezeichnet man dies als Vollintegralbremse. Es sind jedoch auch Kombinationen möglich, bei denen ein Bremshebel auf ein Rad und der andere Bremshebel auf beide Räder wirkt (Teilintegralbremse). Integralbremsanlagen für Krafträder sind beispielsweise aus der DE 38 03 563 A1 und DE 103 16 351 A1 bekannt.

Aufgrund der erhöhten Sicherheit und/oder des gesteigerten Komforts ist es zu erwarten, dass es in Zukunft in immer stärkerem Maße zum Einsatz von Teil- und Vollintegralbremsen bei Motorrädern kommen wird, welche durch aktiven Druckaufbau am Vorder- und/oder Hinterrad den Fahrer beim Bremsvorgang unterstützen und damit für einen optimierten Bremsweg sorgen.

Ein aktiver Aufbau von Bremsdruck geht immer einher mit einer Geräuschentwicklung sowie mit Verschleiß. Für einen aktiven Druckaufbau werden Ventile und eine Pumpe des elektronischen Bremssystems (EBS) benötigt und diese sorgen so für eine nicht unerhebliche Geräuschentwicklung. Gerade im Stand mit ausgeschaltetem oder leerlaufendem Motor ist das Geräusch für den Fahrer durchaus wahrnehmbar und kann störend wirken.

Daher liegt der Erfindung die Aufgabe zugrunde, ein Verfahren zur Regelung des Bremsdruckes in einem elektronisch gesteuerten Integralbremssystem für ein Motorrad, und ein elektronisches Integralbremssystem für ein Motorrad, zur Verfügung zustellen, welches eine möglichst geringe Geräuschentwicklung aufweist und bei welchem der Verschleiß der Komponenten möglichst gering ist.

Diese Aufgabe wird erfindungsgemäß durch das Verfahren gemäß Anspruch 1 sowie das elektronische Bremssystem gemäß Anspruch 8 gelöst.

Der Erfindung liegt der Gedanke zugrunde, einen aktiven Druckaufbau in einem Bremskreis zu vermeiden, wenn er nicht notwendig ist.

Unter Druckaufbauten" ist der Plural von Druckaufbau" zu verstehen.

Es ist bevorzugt, dass ein aktiver Aufbau von Bremsdruck in einem Bremskreis nicht notwendig ist, wenn sich das Fahrzeug, insbesondere das Motorrad, im Stillstand befindet oder mit sehr geringer Geschwindigkeit bewegt, da in diesem Fall keine erhöhte Bremswirkung benötigt wird.

Bevorzugt betrifft die Erfindung ein Verfahren zur Regelung des Bremsdruckes in einem Integralbremssystem für ein Motorrad und ein Integralbremssystem für ein Motorrad. Dabei umfasst das Integralbremssystem mindestens eine Pumpe zum aktiven Aufbau von Bremsdruck an mindestens einer Radbremse.

Bevorzugt ist das Aktivierungsereignis eine Betätigung eines Bremsbetätigungselements eines Kraftrades ist, mit welchem eine Vorderrad- und eine Hinterradbremse angesteuert werden. Gemäß dem Stand der Technik wird bei einer Betätigung eines Bremsbetätigungselementes, welches mit einer Intergralfunktion ausgestattet ist, immer ein aktiver Druckaufbau in dem anderen, nicht direkt dem Betätigungselement zugeordneten Radbremskreis durchgeführt. Dies wird erfindungsgemäß unterbunden, wenn die Bremswirkung nicht benötigt wird.

Gemäß einer bevorzugten Ausführungsform des erfindungsgemäßen Verfahrens wird erkannt, dass das Fahrzeug stillsteht oder annähernd stillsteht, wenn eine Größe, welche ein Maß für die Geschwindigkeit des Fahrzeugs oder ein Maß für eine Raddrehgeschwindigkeit ist, einen vorgegebenen Grenzwert unterschreitet. Durch geeignete Wahl des Grenzwertes ist eine variable Stillstandserkennung oder "fast Stillstandserkennung" möglich. Besonders bevorzugt wird der Grenzwert in Abhängigkeit von der Art und/oder dem Modell des Fahrzeug gewählt. So ist eine fahrzeugspezifische Anpassung des erfindungsgemäßen Verfahrens möglich. Ebenso ist es bevorzugt, den Grenzwert zusätzlich oder alternativ entsprechend eines Fahrerwunsches zu wählen. Damit wird eine Anpassung des erfindungsgemäßen Verfahrens an das Fahrverhalten, die Fahrgewohnheiten und/oder die Fahrvorlieben des einzelnen Fahrers erreicht.

Bevorzugt wird anhand mindestens eines Raddrehzahlsignals von einem Vorderrad oder von einem Hinterrad festgestellt, ob das Fahrzeug stillsteht oder annährend stillsteht. Die Raddrehzahlsignale liegen üblicherweise im Rahmen eines Antiblockiersystems im Kraftfahrzeug vor und können leicht für das erfindungsgemäße Verfahren genutzt werden. Besonders bevorzugt wird die Stillstandserkennung oder "fast Stillstandserkennung" anhand je eines Raddrehzahlsignals von einem Vorderrad und einem Hinterrad durchgeführt. So ist eine zuverlässige Erkennung möglich. Vorteilhafterweise wird der Stillstand oder annährende Stillstand des Fahrzeugs daran erkannt, wenn für ein vorgegebenes Zeitintervall die Anzahl der Signalflanken mindestens eines Raddrehzahlsignals kleiner ist als ein vorgegebener Schwellenwert. So ist eine sensible Bewegungserkennung möglich.

Bevorzugt umfasst das erfindungsgemäße Bremssystem eine Vorderradbremse und eine Hinterradbremse sowie mindestens ein Betätigungselement, mit welchem gleichzeitig die Vorderradbremse und die Hinterradbremse ansteuerbar sind.

Es ist weiterhin bevorzugt, dass das Integralbremssystem eine elektronische Regeleinrichtung zur Regelung der Bremsdrücke an der Vorderradbremse und an der Hinterradbremse umfasst.

Außerdem umfasst das Integralbremssystem bevorzugt Raddrehzahlsensoren zur Messung der Raddrehzahlen des Vorderrades und/oder des Hinterrades, wobei die Raddrehzahlsensoren an die Regeleinrichtung angeschlossen sind.

Gemäß einer ersten bevorzugten Ausführungsform des erfindungsgemäßen Bremssystems handelt es sich um eine Integralbremse mit einem ersten Bremsbetätigungselement zur Betätigung eines ersten Hauptbremszylinders, welcher über eine hydraulische Bremsdruckregeleinrichtung an einer ersten Radbremse angeschlossen ist, welche entweder am Vorder- oder am Hinterrad angeordnet ist, und mit einer zweiten Radbremse, welche an demjenigen Vorder- oder Hinterrad angeordnet ist, welches nicht die erste Radbremse aufweist, wobei durch Betätigung des ersten Bremsbetätigungselements gleichzeitig die erste und die zweite Radbremse ansteuerbar ist. Bei Betätigung des ersten Bremsbetätigungselements wird durch eine Pumpe und eine geeignete Beschaltung der Ventile des Bremssystems ein aktiver Druckaufbau an der zweiten Radbremse durchgeführt.

Gemäß einer zweiten bevorzugten Ausführungsform des erfindungsgemäßen Bremssystems umfasst die Integralbremse zusätzlich zu den Komponenten der ersten bevorzugten Ausführungsform einen zweiten Bremshebel zur Betätigung eines zweiten Hauptbremszylinders, der über eine zweite hydraulische Bremsdruckregeleinrichtung an der zweiten Radbremse angeschlossen ist. Durch Betätigung des zweiten Bremsbetätigungselements wird gleichzeitig die erste und die zweite Radbremse (Vollintegralbremse) oder nur die zweite Radbremse (Teilintegralbremse) angesteuert.

Ein Vorteil der Erfindung liegt darin, dass durch eine sen-sible Bewegungserkennung entschieden werden kann, ob das Motorrad in Bewegung ist oder nicht, und folglich kann eine Entscheidung, ob ein aktiver Druckaufbau zur Unterstützung des Fahrers nötig ist oder nicht, getroffen werden.

Ein weiterer Vorteil der Erfindung liegt in der Verminderung der Geräuschentwicklung des elektronischen Bremssystems. Gerade in Stillstandsituationen ist das erfindungsgemäße elektronische Bremssystem sogar nicht mehr wahrnehmbar. Vorteilhafterweise wird erfindungsgemäß ebenso der Materialverschleiß im elektronischen Bremssystem vermindert, ohne dass dafür ein funktionaler Nachteil in Kauf genommen werden muss.

Weitere bevorzugte Ausführungsformen der Erfindung ergeben sich aus den Unteransprüchen und der nachfolgenden Beschreibung anhand von Figuren.

Es zeigen
- Fig. 1: schematisch eine beispielsgemäße Teilintegral-bremsanlage eines Motorrades zur Durchführung eines erfindungsgemäßen Verfahrens, und
- Fig. 2: eine schematische Darstellung eines Motorrades.

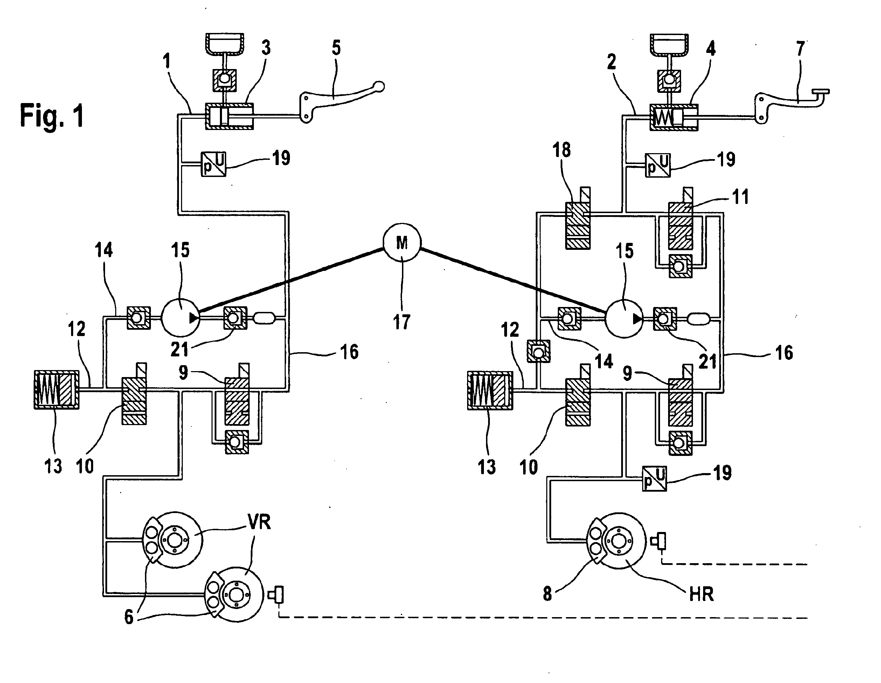

Das erfindungsgemäße Verfahren wird im Folgenden anhand einer Motorrad-Bremsanlage mit Teilintegralbremsfunktion (siehe Fig. 1) beschrieben, es kann jedoch auch in jeder anderen Bremsanlage durchgeführt werden, in welcher bei Vorliegen eines Aktivierungsereignisses ein aktiver Aufbau von Bremsdruck durchgeführt wird. Z.B kann das Verfahren in einer Motorrad-Vollintegral-Bremsanlage oder in einer Pkw-Bremsanlage durchgeführt werden.

In Fig. 1 ist eine beispielsgemäße Teilintegralbremsanlage für ein Kraftrad schematisch dargestellt. Diese besteht aus zwei Bremskreisen 1, 2, einem für das Vorderrad VR und einem für das Hinterrad HR mit jeweils einem Hauptbremszylinder 3, 4. Mit einem Handbremshebel 5 betätigt der Fahrer direkt die Vorderradbremse 6 und mit einem Fußpedal 7 wird die Hinterradbremse 8 betätigt.

Zur Bremsschlupfregelung sind sowohl im Vorderrad- als auch Hinterradbremskreis 1, 2 elektromagnetisch betätigbare Ein-und Auslassventile 9, 10 angeordnet, wobei jeweils ein in Grundstellung geöffnetes Einlassventil 9 in die Bremsleitung des Vorder- und des Hinterradbremskreises 1, 2 eingesetzt ist, welche den jeweils zugehörigen Hauptbremszylinder 3, 4 mit der Vorderrad- oder der Hinterradbremse 6, 8 verbindet. Im Hinterradbremskreis 2 befindet sich zusätzlich ein in Grundstellung geöffnetes Trennventil 11. Das in Grundstellung geschlossene Auslassventil 10 ist jeweils in eine Rücklaufleitung 12 eines jeden Bremskreises eingesetzt, welche die Vorder- oder Hinterradbremse 6, 8 mit jeweils einem Niederdruckspeicher 13 und dem Saugpfad 14 einer zweikreisig aufgeteilten Pumpe 15 verbindet, die nach dem Rückförderprinzip arbeitet. Die Pumpe 15 steht druckseitig mit den Bremsleitungen 16 beider Bremskreise in Verbindung, sodass in einer Bremsschlupfregelphase eine bedarfsgerechte Rückförderung des jeweils von der Vorder- bzw. Hinterradbremse 6, 8 abgelassenen Bremsflüssigkeitsvolumens in die Bremsleitungen 16 beider Bremskreise gewährleistet ist. Die Pumpkolben der beiden Pumpenkreise werden gemeinsam von einem Elektromotor 17 angetrieben.

Beide Bremskreise 1, 2 sind entsprechend ihrem schaltungstechnischen Aufbau gemeinsam als auch unabhängig voneinander betätigbar, mit der Besonderheit, dass bei einer manuellen Betätigung des am Vorderradbremskreis 1 angeschlossenen Hauptbremszylinders 3 nicht nur ein Bremsdruckaufbau in der Vorderradbremse 6, sondern gleichzeitig auch ein elektrohydraulischer Bremsdruckaufbau (aktiver Druckaufbau) in der Hinterradbremse 8 erfolgt, indem der Elektromotor 17 die Pumpe 15 in Betrieb setzt, sobald infolge der im Hinterradbremskreis 2 elektrisch initiierten Offenstellung des Umschaltventils 18 die Pumpe 15 Druckmittel vom Hauptbremszylinder 4 entnimmt und zur Hinterradbremse 8 fördert, während das Trennventil 11 im Hinterradbremskreis 2 die Pumpendruckseite vom Hauptbremszylinder 4 trennt.

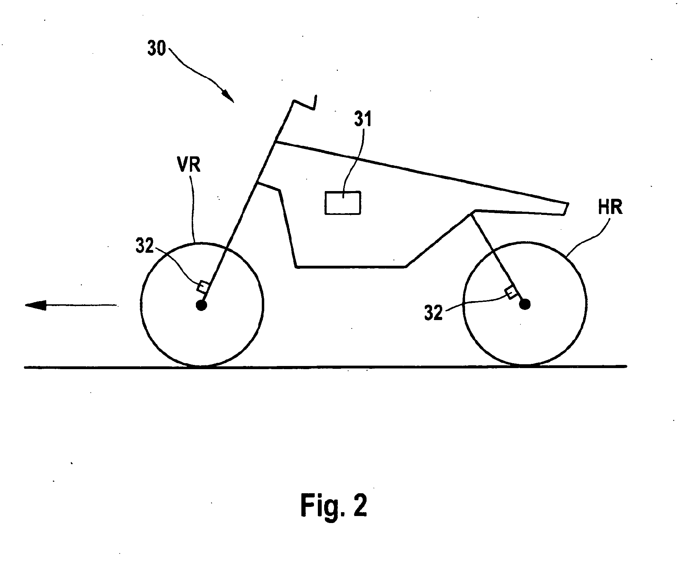

Fig. 2 zeigt eine schematische Darstellung eines Motorrades. Motorrad 30 mit Steuergerät 31 und je einem Raddrehzahlsensor 32 an Vorderrad VR und Hinterrad HR bewegt sich in die durch den Pfeil angegebene Richtung. Steuergerät 31 ist beispielsgemäß für die Steuerung von Bremsdruckregelungen zur Antiblockierregelung und/oder Integralbremsfunktion ausgelegt.

Ein aktiver Aufbau von Bremsdruck geht immer einher mit Geräuschentwicklung und Verschleiß. Die Ventile 11, 18 und die Pumpe 15 des elektronischen Bremssystems werden für den aktiven Druckaufbau benötigt und sorgen so für eine nicht unerhebliche Geräuschentwicklung. Gerade im Stand mit ausgeschaltetem oder leerlaufendem Motor ist das Geräusch für den Fahrer durchaus wahrnehmbar und kann störend wirken.

Da bei der beispielsgemäßen Integralbremse (Fig. 1) mit jeder Betätigung des Handbremshebels 5 durch den Fahrer ein aktiver Druckaufbau in dem Hinterradbremskreis 2 stattfindet, welcher nicht dem betätigten Bremshebel 5 direkt zugeordnet ist, werden erfindungsgemäß, auch im Hinblick auf den Materialverschleiß, nur solche Druckaufbauten durchgeführt, die für ein Erzielen der Bremswirkung auch notwendig sind.

Erfindungsgemäß werden daher unnötige Druckaufbauten im Hinblick auf die oben beschriebenen Probleme der Geräuschentwicklung und des Verschleiß vermieden. So sind unter anderem Druckaufbauten, während sich das Motorrad 30 im Stillstand befindet, nicht notwendig, da im Falle des Stillstandes keine Bremswirkung benötigt wird.

Es ist nun zu bestimmen, ob sich das Motorrad 30 im Stillstand befindet oder nicht, um einen möglicherweise nicht notwendigen Druckaufbau zu vermeiden. Um festzustellen, ob das Motorrad 30 in Bewegung ist (und dadurch nicht im Stillstand) werden z.B. die Radsignale der Raddrehzahlsensoren 32 von Vorderrad VR und Hinterrad HR analysiert. Die Anzahl der ankommenden Radsignale (Ticks) pro Berechnungszyklus (Loop) werden in Bezug zur vergangenen Zeit gesetzt. Werden ausreichend Ticks in einem bestimmten Zeitfenster gezählt, gilt das Motorrad 30 als nicht im Stillstand. Werden weniger als gefordert bzw. keine Ticks gezählt, dann ist das Motorrad 30 per Definition im Stillstand. Als Grenzwert, ab dem das Motorrad 30 per Definition als im Stillstand betrachtet wird, kann z.B. eine Fahrzeuggeschwindigkeit von 2 km/h oder kleiner gewählt werden, oder eine entsprechende Raddrehgeschwindigkeit oder eine entsprechende Anzahl von ankommenden Radsignalen (Ticks) pro Berechnungszyklus (Loop).

Ist das Motorrad 30 im Stillstand, dann wird der Bremsdruck nur noch ,passiv' verwaltet. Das bedeutet beispielsgemäß, dass das Aktivieren von Pumpe 15 und elektrischem Umschaltventil 18 (EUV) zum aktiven Aufbau von Bremsdruck im Hinterradbremskreis 2 verhindert wird. Es wird beispielsgemäß nur noch der schon zur Verfügung stehende Druck im Bremskreis 2 verwaltet. Damit ist es nur noch möglich, dem Fahrerwunsch folgend Bremsdruck zu halten oder abzubauen. Dem Fahrer ist es außerdem möglich, durch Betätigung des Fußbremspedals 7 den Druck im Bremskreis 2 manuell aufzubauen. Dieser manuell aufgebaute Druck kann dann ebenfalls vom elektronischen Bremssystem, wie oben beschrieben, passiv verwaltet werden.

Wird durch das Aufsummieren ausreichender Ticks der Raddrehsignale eines Raddrehzahlsensors 32 im geforderten Zeitfenster eine Bewegung des Motorrads 30 erkannt, so wird der passive Modus verlassen und das elektronischen Bremssystem kann wieder (dem Fahrerwunsch folgend) aktiv Bremsdruck am Hinterrad HR aufbauen. Durch geeignete Wahl der Anzahl der benötigten Ticks und des Zeitfensters ist damit eine beliebig sensible Bewegungserkennung möglich. Somit ist sichergestellt, dass schon kleinste Bewegungen des Motorrads 30 (bei entsprechendem Fahrerwunsch) zu aktiven Druckaufbauten führen, die geeignet sind das Fahrzeug unmittelbar wieder zum Stillstand zu bringen.

Speziell in Situationen, in denen das Motorrad 30 an steilen Hängen gehalten bzw. manövriert werden soll, kann somit am Hinterrad HR eine optimale Bremswirkung erzielt werden. Dies ist besonders in dem Maße von Bedeutung, da, gerade in solchen Situationen, die größte Bremswirkung mit dem Hinterrad HR erzielt werden kann.

Durch die beschriebenen Maßnahmen wird die Geräuschentwicklung des elektronischen Bremssystems erheblich vermindert und ist in den beschriebenen Stillstandsituationen sogar nicht mehr wahrnehmbar. Ebenso wird der Materialverschleiß im elektronischen Bremssystem vermindert, ohne dafür einen funktionalen Nachteil in Kauf zu nehmen.

## Patentansprüche

1. Verfahren zur Regelung des Bremsdruckes in einem elektronisch gesteuerten Integralbremssystem für ein Motorrad (30), wobei ein Aktivierungsereignis zur Durchführung eines aktiven Druckaufbaus in einem Bremskreis (2) führt, **dadurch gekennzeichnet, dass** in bestimmten Situationen, in welchen die Bremswirkung des aktiven Druckaufbaus nicht benötigt wird, das Aktivierungsereignis zu keinem aktiven Druckaufbau in einem Bremskreis (2) durch die Integralfunktion des Motorradbremssystems führt.

2. Verfahren nach Anspruch 1, **dadurch gekennzeichnet, dass** das Aktivierungsereignis eine Betätigung eines Bremsbetätigungselements (5) ist.

3. Verfahren nach Anspruch 2, **dadurch gekennzeichnet, dass** das Aktivierungsereignis eine Betätigung eines Bremsbetätigungselements (5) des Kraftrades ist, mit welchem eine Vorderrad- und eine Hinterradbremse (6, 8) angesteuert werden.

4. Verfahren nach mindestens einem der Ansprüche 1 bis 3, **dadurch gekennzeichnet, dass** die Bremswirkung nicht benötigt wird, wenn das Motorrad stillsteht oder annährend stillsteht.

5. Verfahren nach Anspruch 4, **dadurch gekennzeichnet, dass** erkannt wird, dass das Motorrad stillsteht oder annährend stillsteht, wenn eine Größe, welche ein Maß für die Geschwindigkeit des Motorrads oder eine Raddrehgeschwindigkeit ist, einen vorgegebenen Grenzwert unterschreitet.

6. Verfahren nach Anspruch 4 oder 5, **dadurch gekennzeichnet, dass** anhand mindestens eines Raddrehzahlsignals von einem Vorderrad (VR) oder von einem Hinterrad (HR), insbesondere anhand je eines Raddrehzahlsignals von einem Vorderrad und einem Hinterrad, festgestellt wird, ob das Motorrad stillsteht oder annährend stillsteht.

7. Verfahren nach Anspruch 6, **dadurch gekennzeichnet, dass** erkannt wird, dass das Motorrad stillsteht oder annährend stillsteht, wenn für ein vorgegebenes Zeitintervall die Anzahl der Signalflanken mindestens eines Raddrehzahlsignals kleiner ist als ein vorgegebener Schwellenwert.

8. Elektronisches Integralbremssystem für ein Motorrad, in welchem ein Verfahren gemäß einem der Ansprüche 1 bis 7 durchgeführt wird.

## Claims

1. Method for regulating the brake pressure in an electronically controlled integral brake system for a motorcycle (30), wherein an activation event results in an active pressure increase in a brake circuit (2), **characterized in that** in certain situations in which the braking effect of the active pressure increase is not required the activation event does not lead to an active pressure increase in a brake circuit (2) by means of the integral function of the motorcycle brake system.

2. Method according to Claim 1, **characterized in that** the activation event is an activation of a brake activation element (5).

3. Method according to Claim 2, **characterized in that** the activation event is an activation of a brake activation element (5) of the motorcycle with which a front wheel brake (6) and a rear wheel brake (8) are actuated.

4. Method according to at least one of Claims 1 to 3, **characterized in that** the braking effect is not required if the motorcycle is stationary or approximately stationary.

5. Method according to Claim 4, **characterized in that** it is detected that the motorcycle is stationary or approximately stationary if a variable which is a measure of the velocity of the motorcycle or of a wheel speed drops below a predefined limiting value.

6. Method according to Claim 4 or 5, **characterized in that** at least one wheel speed signal from a front wheel (FW) or from a rear wheel (RW), in particular in each case one wheel speed signal from a front wheel and one from a rear wheel, is used to determine whether the motorcycle is stationary or approximately stationary.

7. Method according to claim 6, **characterized in that** it is detected that the motorcycle is stationary or approximately stationary if the number of signal edges of at least one wheel speed signal is lower than a predefined threshold value for a predefined time interval.

8. Electronic integral brake system for a motorcycle, in which a method according to one of Claims 1 to 7 is carried out.

## Revendications

1. Procédé de régulation de la pression de freinage dans un système de freinage intégral à commande électronique pour une motocyclette (30), un événement d'activation donnant lieu à la réalisation d'une mise en pression active dans un circuit de freinage (2), **caractérisé en ce que** dans certaines situations dans lesquelles l'effet de freinage de la mise en pression active n'est pas nécessaire, l'événement d'activation ne donne lieu à aucune mise en pression active dans un circuit de freinage (2) par le biais de la fonction intégrale du système de freinage de motocyclette.

2. Procédé selon la revendication 1, **caractérisé en ce que** l'événement d'activation est un actionnement d'un élément d'actionnement de frein (5).

3. Procédé selon la revendication 2, **caractérisé en ce que** l'événement d'activation est un actionnement d'un élément d'actionnement de frein (5) de la motocyclette avec lequel sont commandés un frein de roue avant et un frein de roue arrière (6, 8).

4. Procédé selon au moins l'une des revendications 1 à 3, **caractérisé en ce que** l'effet de freinage n'est pas nécessaire lorsque la motocyclette est à l'arrêt ou pratiquement à l'arrêt.

5. Procédé selon la revendication 4, **caractérisé en ce qu'**il est détecté que la motocyclette est à l'arrêt ou pratiquement à l'arrêt lorsqu'une grandeur, qui est une mesure de la vitesse de la motocyclette ou d'une vitesse de rotation de roue, devient inférieure à une valeur limite prédéfinie.

6. Procédé selon la revendication 4 ou 5, **caractérisé en ce qu'**il est déterminé à l'aide d'au moins un signal de vitesse de rotation de roue d'une roue avant (VR) ou d'une roue arrière (HR), notamment au moyen d'un signal de vitesse de rotation de roue respectivement d'une roue avant et d'une roue arrière, si la motocyclette est à l'arrêt ou pratiquement à l'arrêt.

7. Procédé selon la revendication 6, **caractérisé en ce qu'**il est détecté que la motocyclette est à l'arrêt ou pratiquement à l'arrêt lorsque pendant un intervalle de temps prédéfini, le nombre de fronts de signal d'au moins un signal de vitesse de rotation de roue est inférieur à une valeur de seuil prédéfinie.

8. Système de freinage intégral électronique pour une motocyclette dans lequel est mis en oeuvre un procédé selon l'une des revendications 1 à 7.
